# EUROPEAN PATENT SPECIFICATION

(11) **EP 4 261 156 B1**
(45) Date of publication and mention of the grant of the patent: **18.11.2026**
(21) Application number: 22168210.7
(22) Date of filing: 13.04.2022
(51) Int. Cl.: B65G 1/04

(54) **METHOD FOR OPERATING A STORAGE FACILITY WITHOUT LIFTS**
VERFAHREN ZUM BETREIBEN EINES LAGERHAUSES OHNE AUFZÜGE
PROCÉDÉ DE FONCTIONNEMENT D'UNE INSTALLATION DE STOCKAGE SANS ASCENSEURS

(43) Date of publication of application: 18.10.2023
(73) Proprietor: Dematic GmbH, 63150 Heusenstamm (DE)
(72) Inventor: YAMASHITA, Shin, 61440 Oberursel (DE)
(74) Representative: Moser Götze & Partner Patentanwälte mbB

(56) References cited:
- DE-A1- 102012 112 828
- DE-U1- 202004 012 021
- US-A- 5 102 283
- US-A1- 2015 197 397

## Description

The invention relates to a method of operating a storage facility in accordance with the preamble of claim 1.

When picking or compiling orders from ready-picked transport units, such as e. g. articles or containers, it is necessary to provide the transport units, which are associated with a common order, in a targeted or sorted manner. For this purpose, it is typical to temporarily store (buffer) the transport units of one order until all of the transport units required for the order are present. They are then passed collectively onto a collecting line which guides them e. g. to the palletization area, picking station, goods issuing department, dispatch etc.

A (high) rack storage facility includes a feeding or storage-entry area, via which the goods are delivered and from which the racking serving units collect the goods for entry into storage, the so-called pre-zone. Similarly, a removal-from-storage area is required, at which after removal from storage the racking serving units place down the goods also assigned to the pre-zone. In the case of automatic picking warehouses, picking points are typically arranged in the pre-zone. The pre-zone is also where the goods are identified for the inventory management system or the material flow computer.

The applicant's EP 1 964 792 B1 discloses a method for providing transport units from a storage facility in a desired sequence on at least one collecting line. Racking serving units in each storage racking aisle, removal-from-storage lifts and removal-from-storage feeding lines are controlled so as to be coordinated with one another and are loaded with goods such that they ultimately end up sorted on the collecting line or are delivered thereby.

The control and coordination are therefore relatively complex and obviously require technical installations in the so-called pre-zone, i. e. the area outside the actual racking.

US 9,452,886 B2 discloses exchange of transporting units directly between adjoining storage racks from one access aisle to a specific aisle via transverse conveyance locations in the storage racks themselves, wherein the storage and removal vehicle comprises a shuttle at each level of the storage racks, wherein the directly exchanging comprises the shuttle acting on the transport units to displace the transport units by contact with the shuttle in the transverse conveyance locations from one of the adjoining racks to the other of the adjoining racks including transferring product transport units to the specific aisle using the transverse locations.

However, lifts are in contrast to shuttles the bottleneck in such systems.

DE 20 2004 012 021 U1 discloses a storage system that has at least one conveyor with a horizontal transporting unit and executing vertical or vertical and horizontal movements between two shelf columns installed one behind the other. The storage system has at least one row of more than two shelf columns placed one behind the other and separated from one another by respective feed shaft equipped with a conveyor. Though each of the conveyors are movable on both sides of each shelf column, all the compartments of these shelf columns can be directly loaded or emptied.

US 2015/197397 A1 discloses a method of operating a storage facility according to the preamble of claim 1. In particular, the document discloses a storage system having first and second storage sections, each configured for storing containers arranged in multiple rows at various horizontal levels with respect to ground. A group of transportation devices is configured for moving in a horizontal direction along corresponding pairs of rails arranged at multiple horizontal levels in a passage between the first storage section and the second storage section so as to have access to the containers arranged in both the first and second storage sections. Each transportation device movable along a corresponding pair of rails is configured to include a container access mechanism movable up and down with respect to the corresponding pair of rails so as to handle one or more containers stored in a row above and below the corresponding pair of rails.

In contrast thereto, the object of the invention is to provide a method of operating a storage facility in a fashion that alleviates the bottleneck created by lifts and at the same time allows for a reduced technical outlay whilst dispensing with sorting outside of the storage racks.

This object is achieved by the method described in claim 1. Preferred embodiments are described in the subordinate claims.

In accordance with the invention, it has been recognized that if each storage and removal apparatus has a vertical operating range adapted to service more than one storage rack level in its respective aisle and that each aisle has enough of said storage and removal apparatus to access all storage rack levels of an aisle; the vertical operating range of each storage and removal apparatus of a first aisle is offset and staggered in relation to the vertical operating range of each storage and removal apparatus of a neighboring and adjacent second aisle, such that storage units can be vertically and horizontally routed through the storage facility by being actively exchanged between aisles and storage rack levels by use of the storage and removal apparatus only, it is possible to optimize operation of the storage by reducing use of the lifts which leads to high performance due to the number of storage and removal apparatus and enhanced scalability as the number can be increased or reduce an investment of lifts for the same performance.

In other words, vertical transportation of storage units can be achieved by using storage and removal apparatus in neighboring aisles that have overlapping but staggered vertical operation levels in addition to the lifts. The storage units are handed from one storage and removal apparatus to the next storage and removal apparatus which then moves the storage unit internally to a different storage rack level and so on until the storage unit reaches its final aisle and level.

According to an embodiment of the invention, an exchange of a storage unit from a first storage rack level to a second storage rack level not being in the operating range of the same storage and removal apparatus takes place by a first horizontal exchange between aisles and then a vertical exchange between storage rack levels.

If the vertical operating range of storage and removal apparatus in a first aisle and of storage and removal apparatus in a second aisle (neighboring) overlap by at least one vertical storage rack level, the number of storage and removal apparatus needed may be optimized for vertical operation scope.

In a preferred embodiment, the picking process can take place within the racking itself to save time, without need for the storage units to leave the storage rack, i.e. be discharged, sorted and routed to a picking station and back again.

To do so, at least one storage and removal apparatus per aisle includes a picking device for picking from a storage unit into an order unit, which picking device comprises a gripping device, wherein the storage and removal apparatus comprises a receiving location for each of the storage unit and the order unit, which are both arranged on the receiving location to be reachable by the gripping device to perform the picking operation, and the gripping device is actuated by a platform-supported image acquisition and evaluation unit and by a platform-supported controller to execute the picking operation, and wherein the apparatus comprises a level change element allowing the receiving location to change the storage rack level being accessed.

Preferably all storage and removal apparatus include such picking device.

The invention allows for unrestricted access to all inventory by having 3D routing capability in a shuttle system by combining inter-aisle transfer (iAT) and inter-level transfer (iLT) to the shuttle system.

In addition, by equipping the shuttle with a picking mechanism (on the shuttle), it enables such mobile shuttle to fulfill orders within the storage in three dimensions without need for units leaving the storage. This reduces storage and retrieval processes, movement and traffic creating congestion by removing the material flow bottleneck as well as reduction of equipment like lifts, GTP stations and conveyors and eliminating labor (manual picking).

Due to reduced and/or distributed traffic, this allows a high scalability of the system in storage volume and throughput.

Further features and details of the invention will be apparent from the description hereinafter of the drawing, in which
- Figure 1: shows a schematic side view in longitudinal direction of an aisle of a storage rack according to a first embodiment of the invention; and
- Figure 2: shows an exemplary routing of transportation units in the storage rack of figure 1.

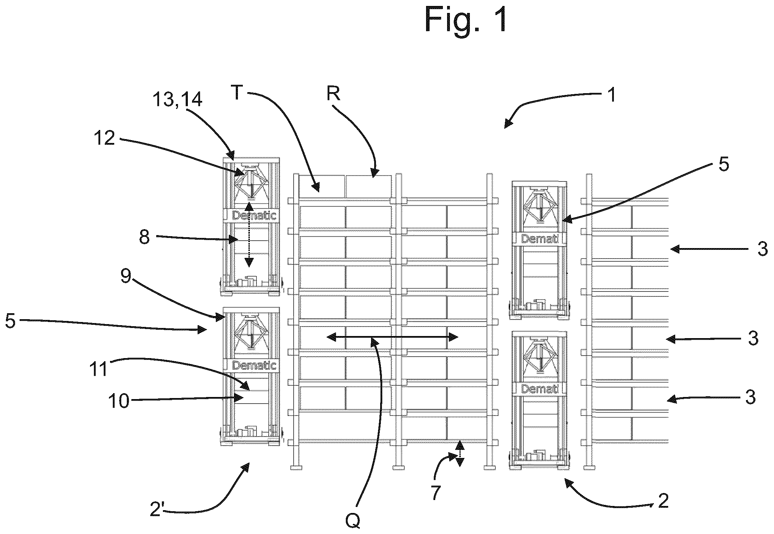

Figure 1 shows a storage facility 1, the storage facility 1 having a plurality of storage racks R and storage rack levels 3 for storage of transportation units T, wherein the storage racks R have an aisle 2 between them on one side and are placed back-to-back on the other side.

The transportation units T may be trays, totes, containers etc. and be of the storage type S in which product is stored so to be picked from when fulfilling orders. The transportation units T may also be of the order type O into which product is put or placed according to an order for fulfilling said order at least partially.

In each aisle 2 more than one storage and removal apparatus 5 is provided, which handles transportation units T to be placed into the storage racks R and removed from the storage racks R via load handling means of the storage and removal apparatus 5.

As a direct exchange of transport units T takes place between two adjoining storage racks, from one storage racking aisle 2 to an adjacent storage racking aisle 2' via transverse conveyance locations Q in the storage racks R, it is possible to dispense with the distribution and/or complex sorting in the pre-zone, since the transport units are already sorted when removed from storage, even if initially they were not arranged in a common racking aisle, as they are stored in the meantime in the removal-from-storage aisle, even if initially they were stored somewhere else.

Therefore, by dispensing with the distribution and sorting outside of the aisles it is possible to achieve a direct transfer of the transport units without conveyors crossing one another, and this can be achieved with reduced and simplified technical outlay as well as with a smaller space requirement and a high level of reliability.

The transport units can thus be simply removed from storage from the respective aisle in the required sequence. In accordance with the invention, the storage and removal apparatus 5 serves to move the transport units T in the transverse conveyance locations (Q), i.e., there is no further drive technology in the rack, but the storage-entry and removal-from-storage apparatus itself is the only active mechanism involved in the transverse displacement.

The storage and removal apparatus 5 places the transport units from the source aisle 2 directly into the transverse conveyance locations Q of the target aisle 2' (by means of multiple-depth storage entry), which means that storage and removal apparatus 5 of the adjacent target aisle 2' simply has access thereto.

In other words, racking storage locations of abutting racks are used for passing transport units from one side of the rack to the next, so that the transport units can be transferred from one rack to the next.

The storage and removal apparatus 5 comprises a transport platform 10 for receiving the respective transport unit T (carton, tray, container, goods without loading aids, etc.). Arranged at the side of the transport platform 10 are in each case telescopic arms 11 which push the transport unit T off the platform 10 or pull it up onto the platform.

For this purpose, the load picking-up means of the storage and removal apparatus 5, i.e. telescopic rail arms 11 with engaging fingers, have an extended reach and can be extended on both sides of the storage racking aisle 2 into the racks R in a known manner.

The storage racks R are provided on each level 3 with specific exchange locations Q for transversely conveying transport units T from one rack R to the adjacent rack R, so that the transport units T are exchanged within the storage racks R themselves and corresponding outlay in the pre-zone can be avoided.

A direct horizontal exchange of transportation units T takes place from one aisle 2 to an adjacent aisle 2' via exchange locations Q within the storage racks R, wherein the storage and removal apparatus 5 itself actively horizontally moves (pushes and/or pulls) the transportation units T in the exchange locations Q.

In the present embodiment, all levels 3 may include exchange locations Q, even though only one is depicted in figure 1.

Additionally, in contrast to the prior art, each storage and removal apparatus 5 has a vertical operating range 6 adapted to service more than one storage rack level 3 in its respective aisle 2 and that each aisle 2 has enough of said storage and removal apparatus 5 to access all storage rack levels 3 of an aisle 2.

The storage and removal apparatus 5 running on rails created by the racks in a certain level 3 and vertical operating range 6 is achieved by the storage and removal apparatus 5 having internal lifting means 8 for changing the storage rack level 3 of a transportation unit T carried, so as to vertically expand the vertical operation range of the telescopic rail arms 11 within a vertically extended cage-like frame structure 9 of the storage and removal apparatus 5, in which the transport platform 10 is formed.

The vertical operating or service range of each storage and removal apparatus 5 of a first aisle 2 is offset and staggered (see arrow 7) in relation to the vertical operating or service range of each storage and removal apparatus 5 of a neighboring and adjacent second aisle 2', such that storage units T can be vertically and horizontally routed through the storage facility 1 without lifts by being actively exchanged between aisles 2 and storage rack levels 3 by use of the storage and removal apparatus 5 only, in which a change of serviced rack level 3 is achieved via the internal lifting means 8, which lift and lower the transport platform 10 (and incl. any transport unit T thereon) together with the telescopic rail arms 11 within the cage-like frame structure 9.

Each storage and removal apparatus includes a picking device 12 for picking from a storage unit S into an order unit O. To enable such, the transport platform 10 is broad enough to allow two transportation units T, namely the storage unit S and order unit O, to be on the transport platform 10 at the same time.

The picking device comprises a gripping device 12 which has an operation such that it can access any product in the storage unit S being on the transportation platform 10 and then place such into the order unit O also being on the transportation platform 10.

The gripping device 12 is actuated by a platform-supported image acquisition and evaluation unit 13 and by a platform-supported controller 14 to execute the picking operation (integrated into the onboard controller).

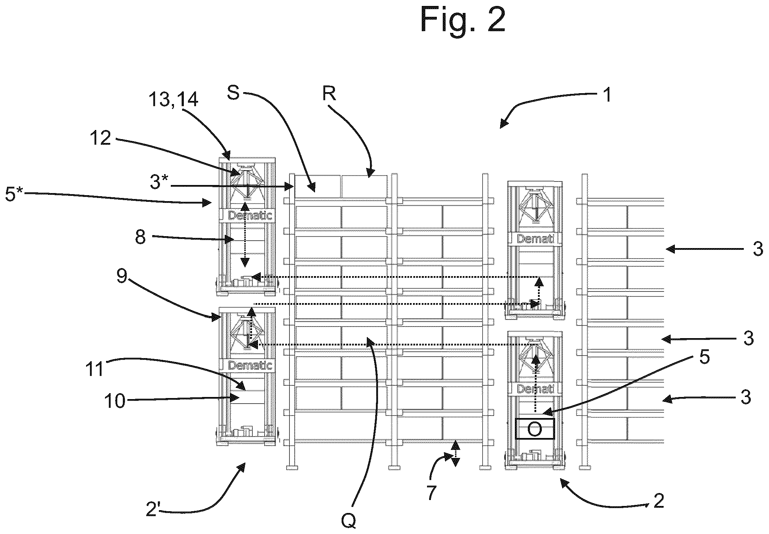

As explained below with reference to figure 2, it therefore becomes possible to perform 3D routing and then picking of orders into order units O from storage units S being located in different aisles.

The order unit O from aisle 2 needs to be transferred from storage and removal apparatus 5 to the neighboring aisle 2' and also from the lower rack level 3 to an upper rack level 3*, so that automated picking can take place in storage and removal apparatus 5* using storage unit S on level 3* in aisle 2'.

To do so, order unit O is first lifted within storage and removal apparatus 5 by lifting means 8, then horizontally transferred in an exchange location Q to aisle 2', where a second storage and removal apparatus 5 receives and pulls the order unit onto its platform 10. There the order unit O is again lifted internally and then horizontally transferred in an upper exchange location Q back to aisle 2 at a higher rack level 3 to a third storage and removal apparatus 5. Again, order unit O is lifted internally and then horizontally transferred in an upper exchange location Q back to aisle 2'.

There it is received by storage and removal apparatus 5* which has access to level 3* and can now temporarily retrieve storage unit S and using gripper 12 to perform the required pick and place operation into order unit O.

The routing of order unit O is indicated by hashed arrows in figure 2.

## Claims

1. Method of operating a storage facility (1), the storage facility (1) having a plurality of storage racks (R) and storage rack levels (3) for storage of transportation units (T), wherein the storage racks (R) have an aisle (2) on at least one side;
for each aisle (2) more than one storage and removal apparatus (5) is provided, transportation units (T) are placed into the storage racks (R) and removed from the storage racks (R) via the storage and removal apparatus (5) and
a direct horizontal exchange of transportation units (T) takes place from one aisle (2) to an adjacent aisle (2') via exchange locations (Q) within the storage racks (R), wherein the storage and removal apparatus (5) itself actively horizontally moves the transportation units (T) in the exchange locations (Q);
each storage and removal apparatus (5) has a vertical operating range adapted to service more than one storage rack level (3) in its respective aisle (2) and each aisle (2) has enough of said storage and removal apparatus (5) to access all storage rack levels (3) of an aisle (2);
**characterized in that** the vertical operating range (6) of each storage and removal apparatus (5) of a first aisle (2) is offset and staggered in relation to the vertical operating range (6) of each storage and removal apparatus (5) of a neighboring and adjacent second aisle (2), such that transportation units (T) can be vertically and horizontally routed through the storage facility (1) without lifts by being actively exchanged between aisles (2) and storage rack levels (3) by use of the storage and removal apparatus (5) only.

2. Method according to claim 1, **characterized in that** vertical operating range (6) of storage and removal apparatus (5) in a first aisle (2) and of storage and removal apparatus (5) in a second aisle (2) overlap by at least one vertical storage rack level.

3. Method according to claim 1 or 2, **characterized in that** exchange of a storage unit (T) from a first storage rack level (3) to a second storage rack level (3') not being in the operating range of the same storage and removal apparatus (5) takes place by at first exchange between aisles (2) and then storage rack levels (3).

4. Method according to any preceding claim, **characterized in that** at least one storage and removal apparatus (5) per aisle (2) includes a picking device for picking from a transportation unit (T) functioning as a storage unit (S) into a transportation unit (T) functioning as an order unit (O), which picking device comprises a gripping device (12), wherein the storage and removal apparatus (5) comprises a receiving location (10) for each of the storage unit (S) and the order unit (O) , which are both arranged on the receiving location (10) to be reachable by the gripping device (12) to perform the picking operation, and the gripping device (12) is actuated by a platform-supported image acquisition and evaluation unit (13) and by a platform-supported controller (14) to execute the picking operation, and wherein the apparatus comprises a level change element (8) allowing the receiving location to change the storage rack level (3) being accessed.

5. Method according to claim 4, **characterized in that** storage units (S) and/or order units (O) are routed through the plurality of storage racks (R) in all x-y-z directions based on either:
a) only storage units (S) are transferred to a specific aisle and/or storage level by means of the more than one storage and removal apparatus (5), wherein the aisle is selected based upon minimization of the movement of the more than one storage and removal apparatus (5) between aisles and/or storage levels and order utilization and distribution of inventory in the storage racks (R) for optimized consolidation in an aisle and/or storage level for order fulfilment;
or
b) only order units (O) are transferred by means of the more than one storage and removal apparatus (5) from aisle to aisle and/or storage level to storage level until a respective order is fulfilled, based upon minimization of lift use and/or retrieval movements;
or
c) order units (O) as well as storage units (S) are transferred by means of the more than one storage and removal apparatus (5) for order fulfilment, based upon minimization of lift use and/or retrieval movements.

## Patentansprüche

1. Verfahren zum Betreiben einer Lagereinrichtung (1), wobei die Lagereinrichtung (1) eine Vielzahl von Lagerregalen (R) und Lagerregalebenen (3) zur Lagerung von Transporteinheiten (T) aufweist, wobei die Lagerregale (R) auf mindestens einer Seite eine Gasse (2) aufweisen,
wobei für jede Gasse (2) mehr als eine Einlagerungs- und Auslagerungsvorrichtung (5) bereitgestellt wird, Transporteinheiten (T) über die Einlagerungs- und Auslagerungsvorrichtung (5) in den Lagerregalen (R) platziert und aus den Lagerregalen (R) entnommen werden,
wobei ein unmittelbarer horizontaler Wechsel von Transporteinheiten (T) von einer Gasse (2) zu einer angrenzenden Gasse (2') über Wechselpositionen (Q) innerhalb der Lagerregale (R) stattfindet, wobei die Einlagerungs- und Auslagerungsvorrichtung (5) selbst die Transporteinheiten (T) in den Wechselpositionen (Q) aktiv in Horizontalrichtung bewegt,
wobei jede Einlagerungs- und Auslagerungsvorrichtung (5) einen vertikalen Betriebsbereich aufweist, der angepasst ist, um mehr als eine Lagerregalebene (3) in ihrer jeweiligen Gasse (2) zu bedienen, und jede Gasse (2) genügend von solchen Einlagerungs- und Auslagerungsvorrichtungen (5) aufweist, um auf alle Lagerregalebenen (3) einer Gasse (2) zuzugreifen,
**dadurch gekennzeichnet, dass** der vertikale Betriebsbereich (6) jeder Einlagerungs- und Auslagerungsvorrichtung (5) einer ersten Gasse (2) im Verhältnis zu dem vertikalen Betriebsbereich (6) jeder Einlagerungs- und Auslagerungsvorrichtung (5) einer benachbarten und angrenzenden zweiten Gasse (2) derart versetzt und gestaffelt ist, dass Transporteinheiten (T) dadurch vertikal und horizontal ohne Aufzüge durch die Lagereinrichtung (1) weitergeleitet werden können, dass sie durch Verwendung nur der Einlagerungs- und Auslagerungsvorrichtungen (5) aktiv zwischen Gassen (2) und Lagerregalebenen (3) gewechselt werden.

2. Verfahren nach Anspruch 1, **dadurch gekennzeichnet, dass** sich der vertikale Betriebsbereich (6) einer Einlagerungs- und Auslagerungsvorrichtung (5) in einer ersten Gasse (2) und einer Einlagerungs- und Auslagerungsvorrichtung (5) in einer zweiten Gasse (2) um mindestens eine vertikale Lagerregalebene überlappen.

3. Verfahren nach Anspruch 1 oder 2, **dadurch gekennzeichnet, dass** ein Wechsel einer Lagereinheit (T) von einer ersten Lagerregalebene (3) zu einer zweiten Lagerregalebene (3'), die nicht in dem Betriebsbereich derselben Einlagerungs- und Auslagerungsvorrichtung (5) liegt, durch einen ersten Wechsel zwischen Gassen (2) und danach Lagerregalebenen (3) stattfindet.

4. Verfahren nach einem der vorhergehenden Ansprüche, **dadurch gekennzeichnet, dass** mindestens eine Einlagerungs- und Auslagerungsvorrichtung (5) pro Gasse (2) eine Kommissioniervorrichtung zum Kommissionieren aus einer Transporteinheit (T), die als eine Lagereinheit (S) fungiert, in eine Transporteinheit (T), die als eine Auftragseinheit (O) fungiert, einschließt, wobei die Kommissioniervorrichtung eine Greifvorrichtung (12) umfasst, wobei die Einlagerungs- und Auslagerungsvorrichtung (5) eine Aufnahmeposition (10) für sowohl die Lagereinheit (S) als auch die Auftragseinheit (O) umfasst, die beide auf der Aufnahmeposition (10) angeordnet sind, um durch die Greifvorrichtung (12) erreichbar zu sein, um die Kommissionieroperation durchzuführen, und die Greifvorrichtung (12) durch eine plattformgestützte Bilderfassungs- und -auswertungseinheit (13) und durch eine plattformgestützte Steuerung (14) betätigt wird, um die Kommissionieroperation auszuführen, und wobei die Vorrichtung ein Ebenenwechselelement (8) umfasst, das es ermöglicht, dass die Aufnahmeposition die Lagerregalebene (3), auf die zugegriffen wird, ändert.

5. Verfahren nach Anspruch 4, **dadurch gekennzeichnet, dass** Lagereinheiten (S) und/oder Auftragseinheiten (O) durch die Vielzahl von Lagerregalen (R) in allen x-y-z-Richtungen geleitet werden auf Grundlage von entweder:
a) nur Lagereinheiten (S) werden mit Hilfe der mehr als einen Einlagerungs- und Auslagerungsvorrichtung (5) zu einer spezifischen Gasse und/oder Lagerebene überführt, wobei die Gasse auf Grundlage einer Minimierung der Bewegung der mehr als einen Einlagerungs- und Auslagerungsvorrichtung (5) zwischen Gassen und/oder Lagerebenen und Auftragsauslastung und Bestandsverteilung in den Lagerregalen (R) für eine optimale Zusammenlegung in einer Gasse und/oder Lagerebene zur Auftragsabwicklung ausgewählt wird,
oder
b) nur Auftragseinheiten (O) mit Hilfe der mehr als einen Einlagerungs- und Auslagerungsvorrichtung (5) von Gasse zu Gasse und/oder Lagerebene zu Lagerebene überführt werden, bis ein jeweiliger Auftrag abgewickelt ist, auf Grundlage einer Minimierung von Aufzugsbenutzung und/oder Entnahmebewegungen,
oder
c) Auftragseinheiten (O) sowie Lagereinheiten (S) mit Hilfe der mehr als einen Einlagerungs- und Auslagerungsvorrichtung (5) zur Auftragsabwicklung überführt werden, auf Grundlage einer Minimierung von Aufzugsbenutzung und/oder Entnahmebewegungen.

## Revendications

1. Procédé pour faire fonctionner une installation (1) de stockage, l'installation (1) de stockage ayant une pluralité de rayons (R) de stockage et des niveaux (3) de rayons de stockage pour des unités (T) de stockage et de transport, dans lequel les rayons (R) de stockage ont une allée (2) au moins d'un côté ; pour chaque allée (2) est prévu plus d'un appareil (5) de stockage et de retrait, des unités (T) de transport sont placées dans les rayons (R) de stockage et retirées des rayons (R) de stockage par l'appareil (5) de stockage et de retrait et
un échange horizontal direct d'unités (T) de transport a lieu d'une allée (2) à une allée (2') voisine par l'intermédiaire d'emplacements (Q) d'échange dans les rayons (R) de stockage, dans lequel l'appareil (5) de stockage et de retrait lui-même déplace horizontalement, de manière active, les unités (T) de transport dans les emplacements (Q) d'échange;
chaque appareil (5) de stockage et de retrait a une plage de fonctionnement verticale propre à desservir plus d'un niveau (3) de rayon de stockage dans son allée (2) respective et chaque allée (2) a suffisamment de l'appareil (5) de stockage et de retrait pour accéder à tous les niveaux (3) de rayons de stockage d'une allée (2); **caractérisé en ce que** la plage (6) de fonctionnement verticale de chaque appareil (5) de stockage et de retrait d'une première allée (2) est décalée et en quinconce par rapport à la plage (6) de fonctionnement verticale de chaque appareil (5) de stockage et de retrait d'une deuxième allée (2) voisine et adjacente de manière à ce que des unités (T) de transport puissent être acheminées verticalement et horizontalement dans l'installation (1) de stockage sans ascenseur en étant échangées activement entre des allées (2) et des niveaux (3) de rayons de stockage par utilisation de seulement l'appareil (5) de stockage et de retrait.

2. Procédé suivant la revendication 1, **caractérisé en ce qu'**une plage (6) de fonctionnement verticale de l'appareil (5) de stockage et de retrait dans une première allée (2) et d'un appareil (5) de stockage et de retrait dans une deuxième allée (2) sont à chevauchement avec au moins un niveau de rayon de stockage vertical.

3. Procédé suivant la revendication 1 ou 2, **caractérisé en ce que** l'échange d'une unité (T) de stockage d'un premier niveau (3) de rayon de stockage à un deuxième niveau (3') de rayon de stockage n'étant pas dans la plage de fonctionnement du même appareil (5) de stockage et de retrait a lieu par un premier échange entre des allées (2), puis entre des niveaux (3) de rayons de stockage.

4. Procédé suivant l'une quelconque des revendications précédentes, **caractérisé en ce qu'**au moins un appareil (5) de stockage et de retrait comprend par allée (2) un dispositif de prélèvement pour prélever d'une unité (T) de transport fonctionnant comme unité (S) de stockage à une unité (T) de transport fonctionnant comme une unité (O) de commande, lequel dispositif de traitement comprend un dispositif (12) de prise, dans lequel l'appareil (5) de stockage et de retrait comprend un emplacement (10) de réception pour chacune de l'unité (S) de stockage et de l'unité (O) de commande, qui sont disposées toutes deux à l'emplacement (10) de réception pour pouvoir être atteinte par le dispositif (12) de prise afin d'effectuer l'opération de prélèvement et le dispositif (12) de prise est actionné par une unité (13) supportée par une plateforme d'acquisition d'image et d'évaluation et par une unité (14) de commande supportée par une plateforme pour exécuter l'opération de prélèvement et dans lequel l'appareil comprend un élément (8) de changement de niveau permettant d'accéder à l'emplacement de réception pour changer le niveau (3) de rayon de stockage.

5. Procédé suivant la revendication 4, **caractérisé en ce que** des unités (S) de stockage et/ou des unités (O) de commande sont acheminées dans la pluralité de rayons (R) de stockage dans toutes les directions x-y-z sur la base de:
a) seulement des unités (S) de stockage sont transférées à une allée précise et/ou à un niveau de stockage au moyen de plus qu'un appareil (5) de stockage et de retrait, dans lequel l'allée est sélectionnée sur la base de la minimisation du déplacement du plus d'un appareil (5) de stockage et de retrait entre des allées et/ou des niveaux de stockage et une utilisation de commande et une distribution de l'inventaire dans les rayons (R) de stockage pour une consolidation optimisée dans une allée et/ou un niveau de stockage afin de satisfaire une commande;
ou
b) seulement des unités (O) de commande sont transférées au moyen du plus d'un appareil (5) de stockage et de retrait d'une allée à une allée et/ou d'un niveau de stockage à un niveau de stockage jusqu'à ce qu'une commande respective soit satisfaite sur la base d'une minimisation de l'utilisation d'un ascenseur et/ou de mouvements de retrait;
ou
c) des unités (O) de commande ainsi que des unités (S) de stockage sont transférées au moyen de plus d'un appareil (5) de stockage et de retrait pour satisfaire des commandes sur la base d'une minimisation de l'utilisation d'un ascenseur et/ou de mouvements de retrait.
